# EUROPEAN PATENT APPLICATION

(11) **EP 4 635 594 A1**
(43) Date of publication of application: **22.10.2025**
(21) Application number: 23916090.6
(22) Date of filing: 19.09.2023
(51) Int. Cl.: B01D 24/00

(54) **SEPARATION DEVICE AND METHOD FOR CONTROLLING SEPARATION DEVICE**

(30) Priority: 12.01.2023 JP 2023003394
(71) Applicant: Metawater Co., Ltd., Tokyo 101-0041 (JP)
(72) Inventor: TABATA, Masao, Tokyo 101-0041 (JP)
(74) Representative: FDST Patentanwälte
(86) International application number: PCT/JP2023/033965
(87) International publication number: WO 2024/150470

(57) **Abstract**

A separation device, includes: a tank which is filled with carriers that separate substances contained in liquid and to which the liquid is supplied; a discharge portion which discharges the substances that are separated by the carriers to outside the tank; and a tubular first screen which is disposed inside the tank and which separates the carriers from the liquid, wherein at least a part of the discharge portion is disposed inside the tank and below the first screen in a vertical direction.

## Description

### TECHNICAL FIELD

The present disclosure relates to a separation device and a control method for the separation device.

### BACKGROUND ART

A solid-liquid separation device (hereafter also called "separation device") removes substances contained in liquid. Specifically, the separation device removes substances contained in liquid by performing filtering using floating carriers (hereafter also called "carriers") filled in a tank, for example (see Patent Literature 1).

### CITATION LIST

### PATENT LITERATURE

Patent Literature 1: WO 2002/072227

### SUMMARY OF INVENTION

### PROBLEMS TO BE SOLVED BY THE INVENTION

In terms of cost reduction, for example, use of a separation device having a simpler configuration is demanded.

### MEANS FOR SOLVING THE PROBLEMS

According to an aspect of the embodiments, a separation device, includes: a tank which is filled with carriers that separate substances contained in liquid and to which the liquid is supplied; a discharge portion which discharges the substances that are separated by the carriers to outside the tank; and a tubular first screen which is disposed inside the tank and which separates the carriers from the liquid, wherein at least a part of the discharge portion is disposed inside the tank and below the first screen in a vertical direction.

### ADVANTAGEOUS EFFECTS OF THE INVENTION

According to the separation device of an aspect of the present disclosure, substances contained in liquid can be removed using a simple configuration.

### BRIEF DESCRIPTION OF DRAWINGS

Fig. 1 is a diagram depicting a configuration of the water treatment system 900 according to the comparative example.
Figs. 2A and 2B are diagrams for describing the specific example of the filtration treatment according to a comparative example.
Figs. 3A and 3B are diagrams for describing the specific example of the cleaning treatment according to a comparative example.
Figs. 4A and 4B are diagrams for describing the specific example of the cleaning treatment according to a comparative example.
Fig. 5 is a diagram depicting a configuration of the water treatment system 100 according to Embodiment 1.
Fig. 6 is a diagram depicting the specific example of the screen 18.
Figs. 7A and 7B are diagrams depicting the specific example of the screen 18.
Figs. 8A and 8B are diagrams depicting the specific example of the filtering treatment.
Fig. 9 is a flow chart depicting the specific example of the filtering treatment according to Embodiment 1.
Figs. 10A and 10B are diagrams depicting the specific example of the cleaning treatment according to Embodiment 1.
Fig. 11 is a flow chart depicting the specific example of the cleaning treatment according to Embodiment 1.
Figs. 12A and 12B are diagrams depicting the specific example of the filtering treatment according to the modification. In this modification, treatment to adjust the thickness of the carriers 12 through which the liquid to be treated 1 passes will be described.

### DESCRIPTION OF EMBODIMENTS

Embodiments of the present disclosure will now be described with reference to the drawings. The following description, however, is not intended to limit the scope of the disclosure and is not for limiting to the subjects of claims. The embodiments may be changed, replaced or modified without departing from the spirit and scope of the present disclosure. Different embodiments may also be combined as needed.

### [Water treatment system 900 in comparative example]

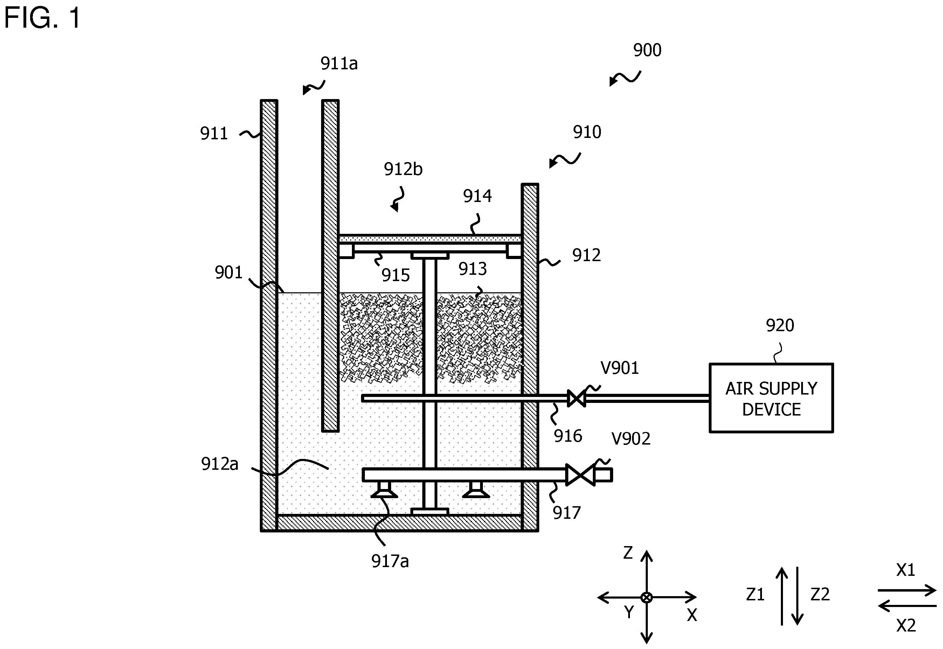

First, a water treatment system 900, which is an example of a treatment system to perform solid-liquid separation, according to a comparative example, will be described. Fig. 1 is a diagram depicting a configuration of the water treatment system 900 according to the comparative example.

The water treatment system 900 according to the comparative example includes a separation device 910 and an air supply device 920, for example, as illustrated in Fig. 1.

The separation device 910 is a device to remove substances, such as suspended solids, contained in liquid 901, such as sewage and raw water (hereafter also called "liquid to be treated 901") supplied from the pre-stage facility. Specifically, the separation device 910 includes, for example, an inflow portion 911 and a tank 912 (hereafter also called "filtration tank 912"), for example. In the following description, it is assumed that the liquid to be treated 901 is sewage, and the substances are suspended solids.

The inflow portion 911 is a water passage extending in a vertical direction (Z axis direction), for example, and the liquid to be treated 901 supplied from a pre-stage facility flows in through an opening 911a on an upper side in the vertical direction (Z1 direction side).

The filtration tank 912 is a tank disposed at a position adjacent to the inflow portion 911, for example, and filters the liquid to be treated 901 supplied from the inflow portion 911. In the example illustrated in Fig. 1, the filtration tank 912 is disposed on an X1 direction side of the inflow portion 911.

Specifically, the filtration tank 912 includes a communicating portion 912a, which communicates with the inflow portion 911, on the side face near the bottom portion (Z2 direction side), for example. The filtration tank 912 also includes an opening 912b, which opens upward (Z1 direction) at a ceiling portion (Z1 direction side).

In other words, the liquid to be treated 901, which flows into the inflow portion 911, flows into an area near the bottom portion in the filtration tank 912 through the communicating portion 912a, for example. In a case where the liquid to be treated 901 flows into the infiltration tank 912 and the liquid level thereof reaches the height of the opening 912b, for example, the liquid flows out of the filtration tank 912 through the opening 912b, and is supplied to a post-stage facility of the filtration tank 912. The post-stage facility of the filtration tank 912 is a reaction tank or the like, to perform biological treatment for the liquid to be treated 901, for example.

The filtration tank 912 includes a plurality of carriers 913, a screen 914, and a support member 915, for example.

The plurality of carriers 913 fill the filtration tank 912 up to a predetermined height, for example. Specifically, each of the plurality of carriers 913 is about 3 (mm) to 5 (mm) in size, and at least a part of the shape thereof is irregular or tubular. Further, each of the plurality of carriers 913 captures suspended solids contained in the liquid to be treated 901 which has risen up to a filling position of the carriers 913 (liquid to be treated 901, which passes through the filling position of the carriers 913), for example.

The screen 914 is installed above (Z1 direction side) the filling position of the carriers 913 in the filtration tank 912, for example. The screen 914 has a plurality of open holes of which hole diameter is smaller than the size of a carrier 913 (passing diameter of carrier 913), for example. In other words, the screen 914 includes a plurality of open holes having a size that can suppress the passing of carriers 913, for example.

The screen 914 is plate-shaped, and is disposed to cover the entire surface of a plane (XY plane) in a case of viewing the inside of the filtration tank 912 from above (Z1 direction side). Thereby, with the screen 914, even if the filling position of the carriers 913 is elevated by the rise of the water level of the liquid to be treated 901, for example, moving of the carriers 913 above the screen 914 (Z1 direction side) can be prevented. In other words, the screen 914 can maintain the height of the filling position of the carriers 913 within a predetermined allowable range, for example. An opening ratio of the plurality of open holes on the screen 914 is approximately 3 (%), for example.

The support member 915 is a member that supports the screen 914 from the bottom in the vertical direction (Z2 direction side), for example. Specifically, the support member 915 is a frame which is disposed inside the filtration tank 912, and is fixed at a bottom or an inner portion of the filtration tank 912.

The screen 914 is fixed inside the filtration tank 912, in this case by being installed above (Z1 direction side) the support member 915, for example.

Referring to Fig. 1 again, the filtration tank 912 includes at least one supply pipe 916 (hereafter also called "air supply pipe 916"), and at least one discharge pipe 917 (hereafter also called "liquid discharge pipe 917"), for example. A case of disposing one air supply pipe 916 and one liquid discharge pipe 917 in the filtration tank 912 will now be described.

The air supply pipe 916 is a pipe that is disposed such that one end thereof is located inside the filtration tank 912, and the other end is connected to the supply device 920, for example, and supplies air, which is supplied from the supply device 920 (e.g. compressed air, compressed in the supply device 920), into the filtration tank 912.

Specifically, the air supply pipe 916 has a plurality of air supply holes (not illustrated) in a portion located inside the filtration tank 912, for example. With the air supply pipe 916, by opening control of a valve V901 disposed in the air supply pipe 916, the air supplied from the supply device 920 is ejected into the filtration tank 912 through the plurality of air supply holes, for example. The opening control of a valve refers to increasing the opening of the valve, including fully opening the value (complete open).

The liquid discharge pipe 917 is a pipe which is disposed such that one end thereof is located inside the filtration tank 912 and the other end is connected to a post-stage facility of the filtration tank 912, for example, and discharges the liquid to be treated 901 inside the filtration tank 912 to the post-stage facility.

Specifically, the liquid discharge pipe 917 has at least one discharge port 917a (two discharge ports 917a in the example in Fig. 1) in a portion located inside the filtration tank 912, for example. By the opening control of the valve V902 disposed in the liquid discharge pipe 917, the liquid discharge pipe 917 discharges the liquid to be treated 901, which flows in from the filtration tank 912 though at least one discharge port 917a, to the post-stage facility, for example. The post-stage facility of the filtration tank 912 is a dehydrator, for example. Suspended solids that are dehydrated by the dehydrator are incinerated in an incinerator, for example. The liquid to be treated 901, which is discharged here, contains a large amount of suspended solids generated after solid-liquid separation by the carriers 913.

### [Filtration treatment in comparative example]

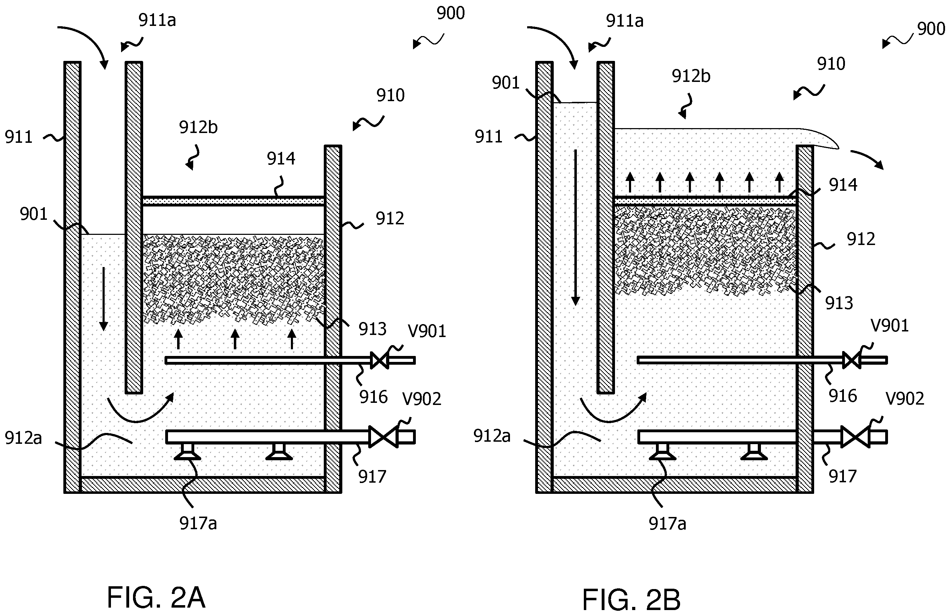

A specific example of treatment to remove the suspended solids contained in the liquid to be treated 901 (hereafter also called "filtration treatment") will be described next. Fig. 2 is a diagram for describing the specific example of the filtration treatment according to a comparative example.

First, the liquid to be treated 901, which flows into the inflow portion 911 from the pre-stage facility, is sequentially supplied into the filtration tank 912 through the communicating portion 912a, for example, as illustrated in Fig. 2A. The liquid to be treated 901, supplied to the filtration tank 912, rises inside the filtration tank 912, as illustrated in Fig. 2B, for example, and passes the filling position of the carriers 913. Thereby the suspended solids contained in the liquid to be treated 901 are solid-liquid separated (removed) from the liquid to be treated 901 by the carriers 913 filled in the filtration tank 912.

Then as illustrated in Fig. 2B, the liquid to be treated 901, which passed the filling position of the carriers 913, further rises in the filtration tank 912 and overflows through the opening 912b, and is supplied to the post-stage facility of the filtration tank 912, for example.

Thereby compared with a case of using a primary sedimentation basin in the water treatment system 900, for example, the separation device 910 can remove the suspended solids contained in the liquid to be treated 901 more quickly. Further, compared with the case of using a primary sedimentation basin in the water treatment system 900, for example, the separation device 910 can contribute to decreasing the facility size.

### [Cleaning treatment in comparative example]

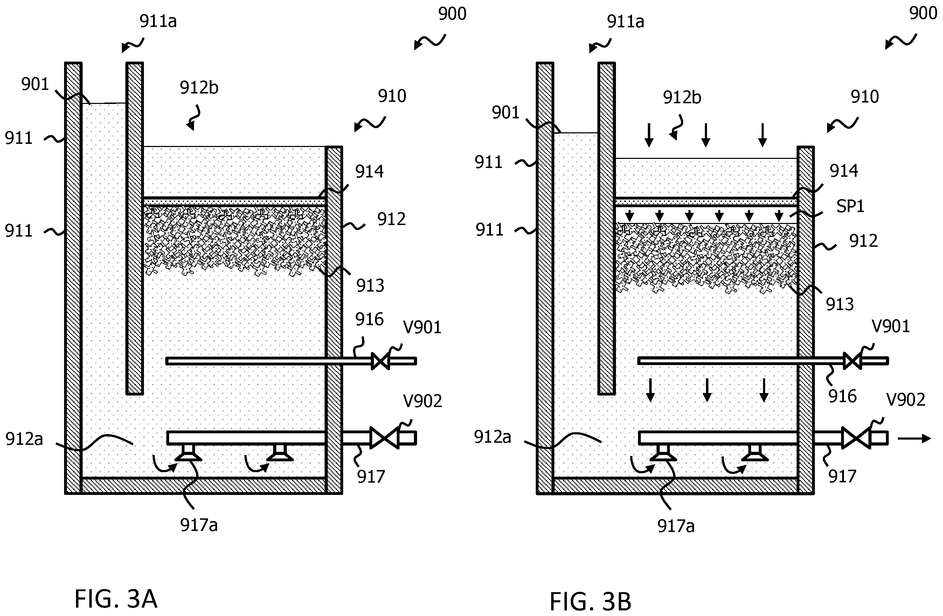

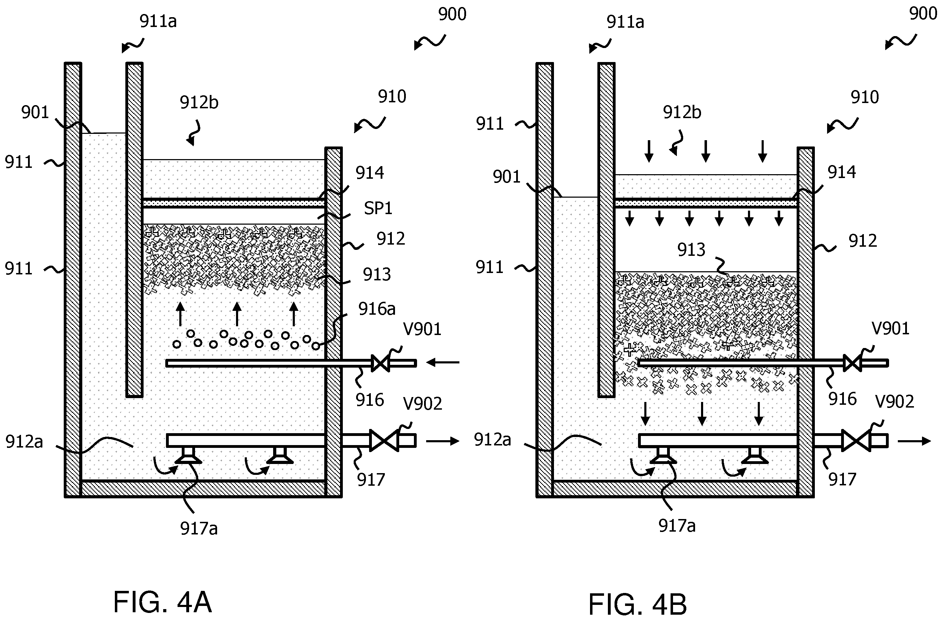

A specific example of treatment to clean the carriers 913 (hereafter also called "cleaning treatment") will be described next. Figs. 3 and 4 are diagrams for describing the specific example of the cleaning treatment according to a comparative example.

In a case of continuing the filtration treatment described in Fig. 2, in the separation device 910, an amount of suspended solids, captured by the carriers 913 filled in the filtration tank 912, increases, for example, and whereby gaps between adjacent carriers 913 and spaces in the carriers are clogged. Therefore in the separation device 910, the cleaning treatment is performed at a necessary timing, in order to prevent a drop in efficiency of filtration by the carriers 913.

Specifically, in the filtration tank 912, the liquid to be treated 901 is discharged from the filtration tank 912 such that the lowering speed of the water level of the liquid to be treated 901 becomes a predetermined speed, for example, whereby the suspended solids captured by the carriers 913 are transferred to the side of the liquid to be treated 901. Then in the filtration tank 912, the liquid to be treated 901, to which the suspended solids were transferred, is continuously discharged, for example, so that the suspended solids are discharged outside the filtration tank 912.

Further, in the filtration tank 912, by opening control of the valve V902 disposed in the liquid discharge pipe 917, as illustrated in Fig. 3A, for example, the liquid to be treated 901 in the filtration tank 912 is allowed to flow from at least one discharge port 917a to the liquid discharge pipe 917.

In a case of using a screen 914 of which opening ratio is larger than a predetermined value (hereafter also called "screen 914 having a large opening ratio") here, the lowering speed of the water level of the liquid to be treated 901 located below the screen 914 (hereafter also called "first liquid to be treated 901"), becomes approximately the same as the lowering speed of the water level of the liquid to be treated 901 located above the screen 914 (hereafter also called "second liquid to be treated 901"), and the first liquid to be treated 901 and the second liquid to be treated 901 are both discharged together through the liquid discharge pipe 917, for example.

Therefore in the filtration tank 912, the lowering speed of the water level of the first liquid to be treated 901 unnecessarily becomes faster in this case, and turbulence of the liquid to be treated 901 may be generated, for example. In other words, in the filtration tank 912, transfer of the suspended solids from the carriers 913 to the liquid to be treated 1 may not be performed efficiently in this case, for example.

In a case of using the screen 914 of which operating ratio is smaller than a predetermined value (hereafter also called "screen 914 having a small opening ratio"), on the other hand, the lowering speed of the water level of the first liquid to be treated 901 becomes faster than the lowering speed of the water level of the second liquid to be treated 902, for example. In other words, inflow of the first liquid to be treated 901 to the liquid discharge pipe 917 per unit time (hereafter also called "inflow to the liquid discharge pipe 917") becomes more than the passing amount of the second liquid to be treated 901 through the screen 914 per unit time (hereafter also called "passing amount through the screen 914"), for example.

This means that, in this case, a negative pressure space SP1 is generated between the first liquid to be treated 901 and the second liquid to be treated 901 (lower face of the screen 914), as illustrated in Fig. 3B. The generated space SP1 in this case acts to increase the passing amount through the screen 914, and acts to decrease the inflow to the liquid discharge pipe 917. Therefore in this case, the lowering speed of the water level of the first liquid to be treated 901 slows down in the filtration tank 912, for example, and in some cases the cleaning of carriers 913 (separation of suspended solids from the carriers 913) by discharging the first liquid to be treated 901 may become insufficient.

Hence in the filtration tank 912, the screen 914 having a small opening ratio is used, and air supplied from the air supply pipe 916 is supplied into the filtration tank 912, for example. Specifically, in the filtration tank 912, opening control of the valve V901, disposed in the air supply pipe 916, is performed after performing the opening control of the valve V902, for example, as illustrated in Fig. 4A, whereby air 916a supplied from the supply device 920 is supplied into the filtration tank 912, so that the supplied air 916a reaches the space SP1.

Thereby in the filtration tank 912, the pressure in the space SP1 can be increased and even in a case of using the screen 914 having a small opening ratio, adjustment can be performed so that the lowering speed of the water level of the first liquid to be treated 901 becomes a demanded speed. As a result, in the filtration tank 912, the suspended solids captured by the carriers 913 can be discharged together with the liquid to be treated 901, for example, and the cleaning of the carriers 913 is enabled.

However in the water treatment system 900, it is necessary to dispose the air supply pipe 916 and the supply device 920 to perform the cleaning of the carriers 913 efficiently. This means that in the water treatment system 900, the cost to perform the filtering treatment and the cleaning treatment increases, for example.

Further, in the separation device 910, by providing the support member, such as a frame, in the filtration tank 912, a drift of the liquid to be treated 901 may be generated inside the filtration tank 912. Therefore in the separation device 910, carriers 913 that actually capture the suspended solids may be imbalanced, for example, which may make it difficult to efficiently remove the suspended solids contained in the liquid to be treated 901.

Therefore in a water treatment system 100 according to Embodiment 1, the filtering treatment and the cleaning treatment are performed without using the support member 915, the supply device 920, and the like of comparative examples, for example, as mentioned later. The water treatment system 100 according to Embodiment 1 will be described next.

### [Water treatment system 100 in Embodiment 1]

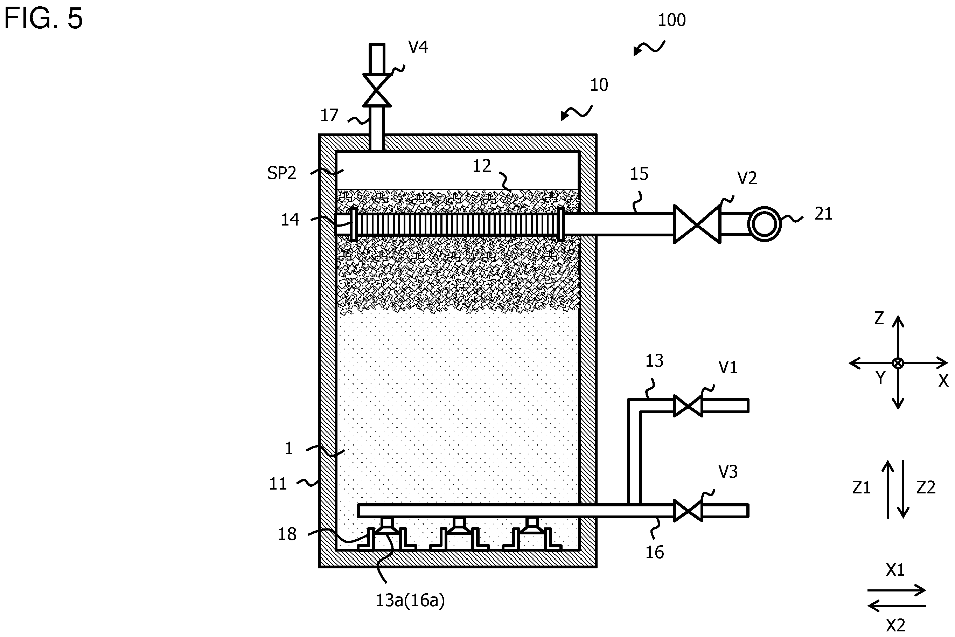

Fig. 5 is a diagram depicting a configuration of the water treatment system 100 according to Embodiment 1.

The water treatment system 100 according to Embodiment 1 includes a separation device 10, for example, as illustrated in Fig. 5. The water treatment system 100 is installed in a sewage treatment plant, for example, so as to treat in-flowing sewage.

The separation device 10 is a device to remove substances contained in liquid 1, such as sewage and raw water (hereafter also called "liquid to be treated 1") supplied from a pre-stage facility (not illustrated), for example. Specifically, the separation device 10 includes a tank 11 (hereafter also called "filtration tank 11"), for example. In the following description, it is assumed that the liquid to be treated 1 is sewage, and the substances are suspended solids.

The filtration tank 11 is a tank where a plurality of carriers 12 are filled at a predetermined height, for example, and filters the liquid to be treated 1 supplied from the pre-stage facility.

Each of the plurality of carriers 12 is approximately 3 (mm) to 5 (mm) in size, just like the case of the carriers 913 described in Fig. 1, and the like, and at least a part of the shape thereof is irregular or tubular, for example. Further, just like the case of the carriers 913 described in Fig. 1, and the like, each of the plurality of carriers 12 captures the suspended solids contained in the liquid to be treated 1 (liquid to be treated 1 which passes through the filling position of the carriers 12), of which water level has risen to the filling position of the carriers 12, for example.

The filtration tank 11 includes a supply pipe 13 (hereafter also called "liquid supply pipe 13"), a tubular screen 14 (hereafter also called "first screen 14"), and a discharge pipe 15 (hereafter also called "liquid discharge pipe 15" or "first pipe 15"), for example.

The liquid supply pipe 13 is a pipe disposed such that one end thereof is located inside the filtration tank 11, and the other end is connected to the pre-stage facility which supplies the liquid to be treated 1 to the separation device 10, and supplies the liquid to be treated 1, supplied from the pre-stage facility, into the filtration tank 11. The one end is also called "first end", and the other end is also called "second end".

Specifically, the liquid supply pipe 13 includes at least one supply port 13a to supply the liquid to be treated 1 into the filtration tank 11, in a portion located inside the filtration tank 11, for example. Each of at least one supply port 13a has a circular shape, for example, and is disposed at a position facing a bottom portion of the filtration tank 11. The liquid supply pipe 13 supplies the liquid to be treated 1, which is supplied from the pre-stage facility, from at least one supply port 13a into the filtration tank 11, by the opening control of the valve V1 disposed in the liquid supply pipe 13, for example.

In other words, in the case of the filtration tank 11 according to the present embodiment, the liquid to be treated 1, which is supplied from the pre-stage facility, is supplied into the filtration tank 11 through the liquid supply pipe 13, for example, unlike the case of the comparative example.

In the example illustrated in Fig. 5, the liquid supply pipe 13 merges with a discharge pipe 16 (hereafter also called "liquid discharge pipe 16" or "second pipe 16"), which is described later, and a part of the liquid supply pipe 13 and a part of the liquid discharge pipe 16 are shared, but the present disclosure is not limited to this. Further, in the example illustrated in Fig. 5, each of at least one supply port 13a is shared with each of at least one discharge port 16a respectively, but the present disclosure is not limited to this. Specifically, the liquid supply pipe 13 may be a different pipe from the liquid discharge pipe 16, for example, and each of at least one supply port 13a may be disposed in the liquid supply pipe 13, and each of at least one discharge port 16a may be disposed in the liquid discharge pipe 16.

A screen 14 is a tubular screen which is disposed on a side face inside the filtration tank 11 near a ceiling portion (Z1 direction side), and extends in the X axis direction, for example. The screen 14 has a plurality of open holes having a hole diameter smaller than the size of a carrier 12 (passing diameter of the carrier 12), for example. The screen 14 allows the liquid to be treated 1 around the screen 14 (liquid to be treated 1 after suspended solids are removed by the carriers 12) to flow in when the water level of the liquid to be treated 1, inside the filtration tank 11, reaches the height of the screen 14, for example.

A liquid discharge pipe 15 is a pipe of which one end communicates with the inside of the screen 14, and the other end is connected to the post-stage facility, for example, and discharges the liquid to be treated 1, which is supplied from the filtration tank 11 through the screen 14, to the post-stage facility of the filtration tank 11.

Specifically, the liquid discharge pipe 15 supplies the liquid to be treated 1 inside the filtration tank 11 to the post-stage facility of the filtration tank 11, by the opening control of a valve V2 disposed in the liquid discharge pipe 15 (hereafter also called "first valve V2"), for example. In the example illustrated in Fig. 5, the other end of the liquid discharge pipe 15 communicates with a discharge pipe 21 (pipe extending in the Y axis direction in the example in Fig. 5), which is connected to the post-stage facility. Hereafter the liquid discharge pipe 15 and the valve V2 may be collectively called "outflow portion".

In other words, the filtration tank 11 according to the present embodiment includes the screen 14 and the liquid discharge pipe 15, for example, whereby the liquid to be treated 1, which moved into the screen 14, can be directly discharged to outside the filtration tank 11. Therefore in the filtration tank 11 according to the present embodiment, the liquid to be treated 1, after suspended solids are removed, can be discharged to outside the filtration tank 11.

This means that, in the separation device 10 according to the present embodiment, the screen 14, which is smaller than the screen 914 of the comparative example, can be used, and there is no need to install the support member 915 of the comparative example, for example, hence the configuration of the filtration tank 11 can be simplified. Specifically, in the case of the separation device 10, compared with the case of the comparative example, the construction period that is needed for installing the separation device 10 can be decreased, and the cost that is needed for installing the separation device 10 can be reduced, for example.

In the filtration tank 912 according to the comparative example, the screen 914 is disposed to cover the entire surface of the XY plane inside the filtration tank 912. In the filtration tank 11 according to the present embodiment, however, the screen 14 is disposed to cover only a part of the XY plane inside the filtration tank 11. Therefore in the filtration tank 11 according to the present embodiment, in a case where the water level of the liquid to be treated 1 inside the filtration tank 11 rises above the screen 14, as illustrated in Fig. 5, for example, at least a part of the carriers 12 also rises above the screen 14 accordingly.

The shape of the screen 14 is preferably cylindrical, for example. Thereby in the filtration tank 11, part of the carriers 12 remaining above the screen 14 can be prevented, for example, and the decrease of carriers 12 that filter the liquid to be treated 1 can be suppressed.

Referring to Fig. 5 again, the filtration tank 11 includes the liquid discharge pipe 16 and a vent pipe 17, for example.

The liquid discharge pipe 16 is disposed such that one end thereof is located inside the filtration tank 11, and the other end is connected to the post-stage facility of the filtration tank 11, for example, and is disposed below the screen 14 in the vertical direction (Z2 direction side). The liquid discharge pipe 16 supplies the liquid to be treated 1, which is discharged from the filtration tank 11, to the post-stage facility of the filtration tank 11, for example.

Specifically, the liquid discharge pipe 16 is a pipe used for cleaning treatment, for example, and includes at least one discharge port 16a, which discharges the liquid to be treated 1 at the portion located inside the filtration tank 11. Each of at least one discharge port 16a has a circular shape, for example, and is disposed at a position facing the bottom portion inside the filtration tank 11. The liquid discharge pipe 16 supplies the liquid to be treated 1 inside the filtration tank 11 to the post-stage facility of the filtration tank 11 through at least one discharge port 16a, for example, by the opening control of the valve V3 (hereafter also called "second valve V3") disposed in the liquid discharge pipe 16. Hereafter the liquid discharge pipe 16, at least one discharge port 16a, and the valve V3 may be collectively called "discharge portion".

A screen 18 (hereafter also called "second screen 18"), for example, is disposed around each of at least one discharge port 16a, as illustrated in Fig. 5.

The screen 18 is a member installed at the bottom portion inside the filtration tank 11, for example, and has a cylindrical shape that covers at least a space between the discharge port 16a and the bottom portion inside the filtration tank 11. The screen 18 also includes a plurality of open holes of which hole diameter is smaller than the size of a carrier 12 (passing diameter of a carrier 12), for example. In other words, the screen 18 includes a plurality of open holes having a size that can suppress the passing of carriers 12, for example.

### [Specific example of screen 18]

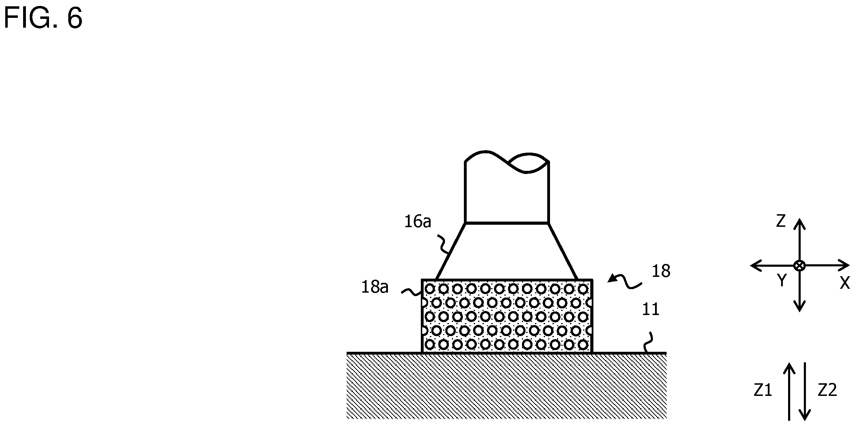

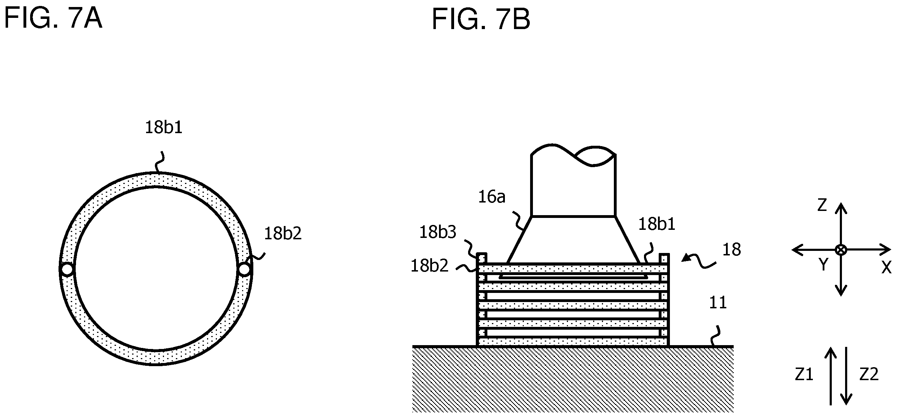

A specific example of the screen 18 will be described next. Figs. 6 and 7 are diagrams depicting the specific example of the screen 18.

As illustrated in Fig. 6, the screen 18 may be punched metal, which has a cylindrical shape covering the space between the discharge port 16a and the bottom portion inside the filtration tank 11, and includes a plurality of open holes 18a of which hole diameter is smaller than the size of a carrier 12 (passing diameter of the carrier 12), for example. The punched metal screen may be fastened to the bottom portion inside the filtration tank 11 using a plurality of fastening bolts (not illustrated), for example. The shape of each of the plurality of open holes 18a may be oval or elliptical, for example.

The screen 18 may also be formed by a plurality of spacers 18b1 having an annular shape, for example, as illustrated in Fig. 7A. Specifically, the screen 18 may be a plurality of spacers 18b1 which are stacked in the vertical direction (Z direction), for example, as illustrated in Fig. 7B, and each spacer 18b1 is fixed in such a state that the interval (opening width) between each spacer 18b1 is smaller than the size of the carrier 12 (passing diameter of a carrier 12). Each of the plurality of spacers 18b1 may be fastened to the bottom portion inside the filtration tank 11 by a plurality of fastening bolts 18b3 (two fastening bolts 18b3 in the example in Fig. 7B), penetrating through a plurality of through holes 18b2 (two through holes 18b2 in the example in Fig. 7B), of each spacer 18b1 respectively, for example.

In a case where the liquid supply pipe 13 merges with the liquid discharge pipe 16, and at least one supply port 13a and at least one discharge port 16a are shared, as illustrated in Fig. 5, the screen 18 can prevent suspended solids, larger than the plurality of open holes, from flowing into the filtration tank 11 from the pre-stage facility, and the generation of clogging of carriers 12 can be prevented.

The vent pipe 17 is a pipe which is disposed such that one end thereof is located inside the filtration tank 11, and the other end communicates with outside the filtration tank 11, so as to supply air into the filtration tank 11, for example, and is disposed at a ceiling portion of the filtration tank 11 (edge in the Z1 direction side).

Specifically, with the vent pipe 17, in a case where a space SP2 above the liquid to be treated 1 inside the filtration tank 11 is a negative pressure, for example, outside air is supplied to the filtration tank 11 by the opening control of valve V4 (hereafter also called "pressure adjusting valve V4") disposed in the vent pipe 17. Hereafter the vent pipe 17 and the valve V4 may be collectively called "vent portion".

In other words, in a case where the liquid to be treated 1 inside the filtration tank 11 is discharged through the liquid discharge pipe 16 in a state where closing control of the valve V4 is performed, the space SP2 above the liquid to be treated 1 in the filtration tank 11 becomes negative pressure. In this case, the space SP2 in the negative pressure acts to decrease the inflow of the liquid to be treated 1 to the liquid discharge pipe 16 per unit time (hereafter also called "inflow to the liquid discharge pipe 16"). Therefore in the filtration tank 11, the lowering speed of the water level of the liquid to be treated 1 inside the filtration tank 11 becomes slow in this case, and it becomes difficult to sufficiently perform cleaning of the carriers 12 by discharging the liquid to be treated 1 (separation of suspended solids from the carriers 12), for example. The closing control of the valve is a control to decrease the opening of the valve, and includes closing the valve completely (complete closure).

Hence in the filtration tank 11 according to the present embodiment, the opening control of the valve V4 disposed in the vent pipe 17 is performed after a predetermined time (e.g. several seconds) has elapsed since the start of discharging the liquid to be treated 1 through the liquid discharge pipe 16, for example.

Thereby in the filtration tank 11 according to the present embodiment, the pressure in the space SP2, generated in the case of performing the cleaning treatment, can be increased, for example, and the decrease of the lowering speed of the water level of the liquid to be treated 1 in the filtration tank 11 can be suppressed.

This means that in the water treatment system 100 according to the present embodiment, cleaning of the carriers 12 by discharging the liquid to be treated 1 can be performed sufficiently, without disposing the air supply pipe 916 and the supply device 920 of the comparative example, for example. In other words, in the water treatment system 100, configuration of the separation device 10 can be simplified while the cleaning of the carriers 12 by discharging of the liquid to be treated 1 can still be performed sufficiently, for example.

The valve V4 may be constituted of a valve of which opening is adjustable (hereafter also called "opening adjustable valve"), and a valve which controls only a complete open or complete closure of the opening degree (hereafter also called "automatic valve"). In the filtration tank 11, in the case of starting the cleaning treatment, only opening control of the automatic valve may be performed, for example, so as to control the lowering speed of the water level of the liquid to be treated 1 inside the filtration tank 11.

As described above, the separation device 10 according to the present embodiment includes, for example: the filtration tank 11 which is filled with carriers 12 that separate suspended solids contained in the liquid to be treated 1, and to which the liquid to be treated 1 is supplied from the pre-stage facility; the discharge portion which discharges the suspended solids separated from the carriers 12 to outside the filtration tank 11; and the screen 14 which is disposed inside the filtration tank 11 and which separates the carriers 12 from the liquid to be treated 1. In the separation device 10 according to the present embodiment, at least a part of the discharge portion is disposed inside the filtration tank 11 below the screen 14 in the vertical direction.

Thereby the separation device 10 according to the present embodiment can perform the filtration processing using a simple configuration, for example. Hence in the case of the separation device 10, the construction period that is needed for installing the separation device 10 can be decreased, and the cost that is needed for installing the separation device 10 can be reduced, for example, compared with the case of the separation device 910 according to the comparative example.

The separation device 10 according to the present embodiment further includes a vent portion to perform ventilation between inside the filtration tank 11 and outside the filtration tank 11, for example.

Thereby the separation device 10 according to the present embodiment can suppress the decrease of the lowering speed of the water level when the liquid to be treated 1 is discharged, for example.

### [Filtering treatment according to Embodiment 1]

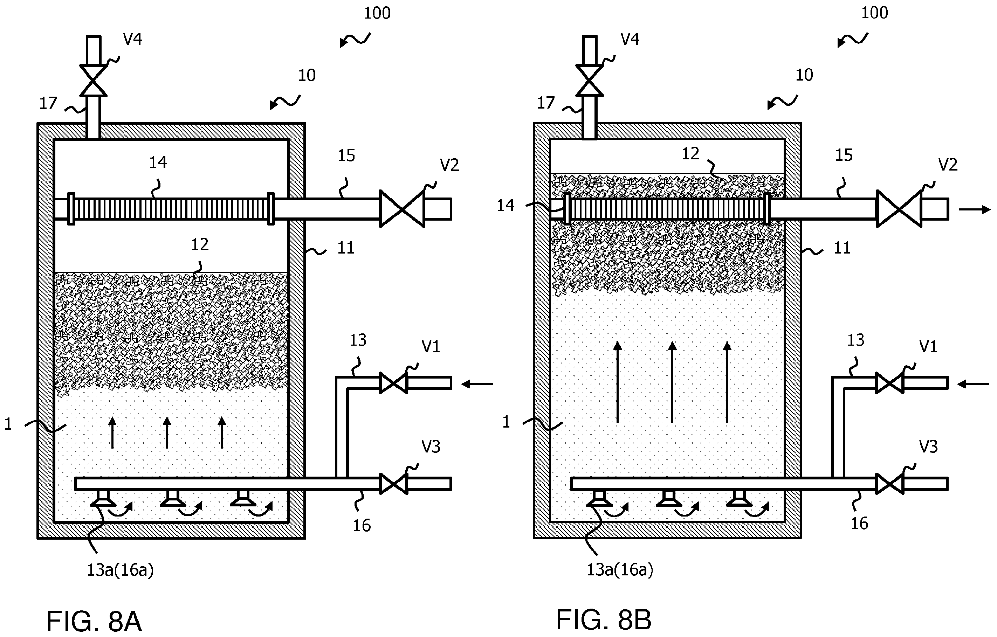

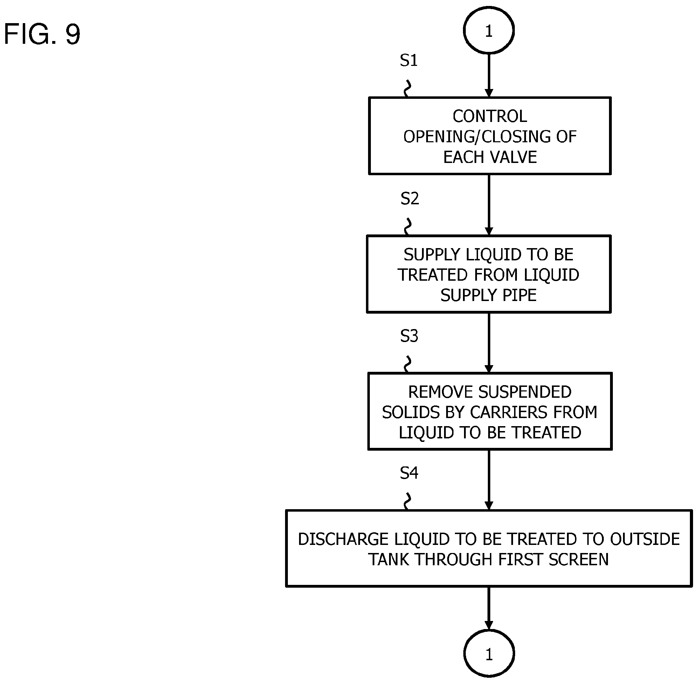

A specific example of the filtering treatment according to Embodiment 1 will be described next. Fig. 8 is a diagram depicting the specific example of the filtering treatment. Fig. 9 is a flow chart depicting the specific example of the filtering treatment according to Embodiment 1.

In the following description, an administrator of the water treatment system 100 (hereafter also called "administrator") performs the filtering treatment, but the controller having electronic circuits (not illustrated) may perform the filtering treatment. Specifically, the controller may be a computer which includes a central processing unit (CPU) and memories, and which performs the filtering treatment by executing a predetermined program, for example. The electronic circuits to execute the filtering treatment may be a field programmable gate array (FPGA) or an application specific integrated circuit (ASIC), for example.

First, the administrator performs opening control of the valve V1 and the valve V2 (e.g. complete open), and performs closing control of the valve V3 and the valve V4 (e.g. complete closure) (step S1 in Fig. 9), for example.

In the filtration tank 11, the liquid to be treated 1, which is supplied from the pre-stage facility through the liquid supply pipe 13, starts flowing, for example, as illustrated in Fig. 8A, and the water level of the liquid to be treated 1 gradually rises (step S2 in Fig. 9).

Then in the filtration tank 11, the suspended solids contained in the liquid to be treated 1, which has risen to the filling position of the carriers 12, are sequentially removed, for example (step S3 in Fig. 9).

Then in the filtration tank 11, the liquid to be treated 1, around the screen 14 (liquid to be treated 1 which has risen to the height of the screen 14) sequentially flows into the screen 14, for example, as illustrated in Fig. 8B, and is discharged to outside the filtration tank 11 through the liquid discharge pipe 15 (step S4 in Fig. 9).

As described above, in the separation device 10, according to the present embodiment, the inflow portion includes the liquid discharge pipe 15 through which the liquid to be treated 1 inside the screen 14 flows, and the valve V2 disposed in the liquid discharge pipe 15; and the discharge portion includes the liquid discharge pipe 16 through which the suspended solids flow, and the valve V3 disposed in the liquid discharge pipe 16, for example. The separation device 10 performs, for example: a supply step of supplying the liquid to be treated 1 to the filtration tank 11, and performing the closing control of the valve V3 and opening control of the valve V2; a separation step of separating the suspended solids contained in the liquid to be treated 1 using the carriers 12; and an outflow step of allowing the liquid to be treated 1 after the suspended solids are separated to flow into the screen 14, and allowing the liquid to be treated 1 that flows in, to flow outside the filtration tank 11 from the liquid discharge pipe 15.

Thereby the separation device 10, according to the present embodiment, can remove the suspended solids contained in the liquid to be treated 1, for example, even if the configuration is simpler than the separation device 910 according to the comparative example.

### [Cleaning treatment in Embodiment 1]

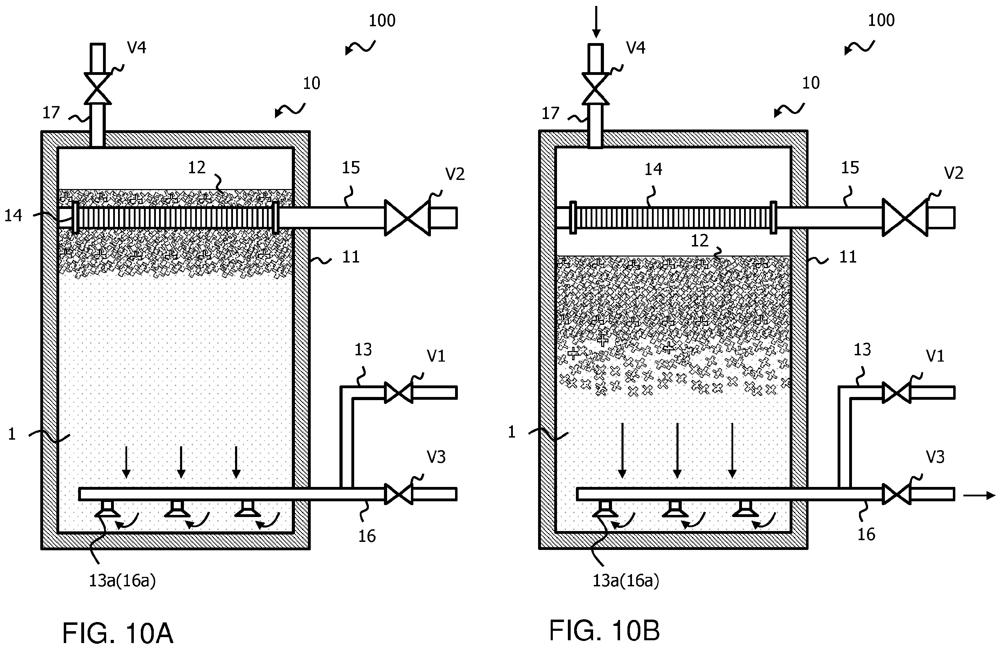

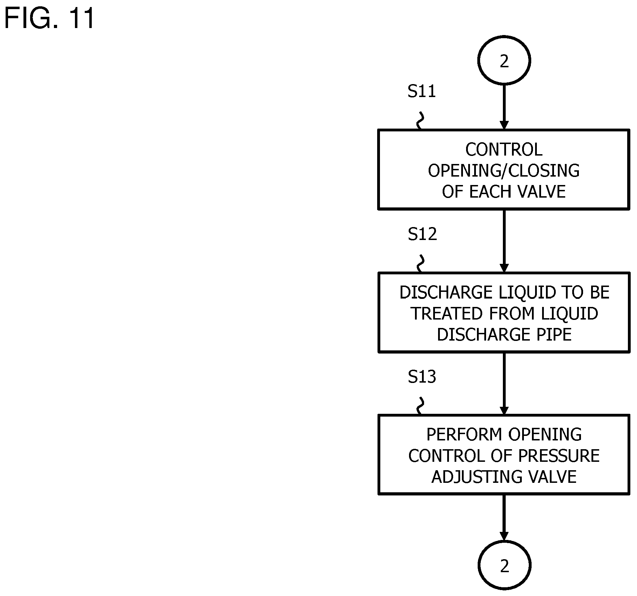

A specific example of the cleaning treatment according to the present embodiment will be described next. Fig. 10 is a diagram depicting the specific example of the cleaning treatment according to Embodiment 1. Fig. 11 is a flow chart depicting the specific example of the cleaning treatment according to Embodiment 1. In the following description, an administrator performs the cleaning treatment, but the cleaning treatment may be performed by a computer executing a predetermined program.

First, the administrator performs the opening control of the valve V3, and performs the closing control of the valves V1, V2 and V4 (step S11 in Fig. 11), for example. In other words, in this case, the administrator stops supply of the liquid to be treated 1 from the liquid supply pipe 13 to the filtration tank 11, and starts discharging the liquid to be treated 1 from the filtration tank 11 to the liquid discharge pipe 16.

Then in the filtration tank 11, the liquid to be treated 1 inside the filtration tank 11 is sequentially discharged through the liquid discharge pipe 16, for example, and the water level of the liquid to be treated 1 lowers, as illustrated in Fig. 10A (step S12 in Fig. 11).

In other words, in the filtration tank 11, the water level of the liquid to be treated 1 inside the filtration tank 11 is lowered in this case, so as to transfer the suspended solids captured by the carriers 12 to the liquid to be treated 1. Then, in the filtration tank 11, the liquid to be treated 1, into which the suspended solids are transferred, is discharged to outside the filtration tank 11.

After a predetermined time (e.g. several seconds) has elapsed since the start of discharging the liquid to be treated 1 through the liquid discharge pipe 16, for example, the administrator performs the opening control of the valve V4 (step S13 in Fig. 11).

In other words, in the filtration tank 11, pressure in the space SP2 is increased by supplying air (outside air) into the space SP2, for example, so as to adjust the lowering speed of the water level of the liquid to be treated 1. Then in the filtration tank 11, the suspended solids captured by the carriers 12 are transferred to the side of the liquid to be treated 1, as illustrated in Fig. 10B.

Then in the filtration tank 11, the liquid to be treated 1 inside the filtration tank 11 is continuously discharged through the liquid discharge pipe 16.

As described above, the separation device 10, according to the present embodiment, preforms a discharge step of stopping supply of the liquid to be treated 1 to the filtration tank 11, performing the opening control of the valve V3, and discharging the liquid to be treated 1 and the suspended solids separated by the carriers 12 through the liquid discharge pipe 16 to outside the filtration tank 11, for example. Further, in the separation device 10, the discharge speed of the liquid to be treated 1 to outside the filtration tank 11 is controlled by controlling the opening degree of the valve V4 in the discharge step, for example.

Thereby the separation device 10, according to the present embodiment, can perform the cleaning treatment sufficiently even if the configuration is simple.

A plurality of pipes may be used for each of the above mentioned pipes in the separation device 10, for example.

Specifically, a plurality of screens 14 may be disposed in the filtration tank 11, for example. In the case of disposing the plurality of screens 14 in the filtration tank 11, each of the plurality of screens 14 may be connected to each of a plurality of liquid discharge pipes 15 respectively, or may be connected to each of branch pipes branching from one liquid discharge pipe 15 respectively, for example. Thereby in filtering, the separation device 10 can increase the discharge amount (filtration amount) of the liquid to be treated 1, which is discharged to outside the filtration tank 11, per unit time, for example.

A plurality of liquid discharge pipes 16 may be disposed in the filtration tank 11, for example. In the case of disposing the plurality of liquid discharge pipes 16 in the filtration tank 11, each of the plurality of liquid discharge pipes 16 may be connected to each of a plurality of liquid supply pipes 13 respectively, or may be connected to each of the branch pipes branching from one liquid supply pipe 13 respectively, for example. Thereby the separation device 10 can increase the inflow amount (supply amount) of the liquid to be treated 1, which flows into the filtration tank 11, per unit time, for example. Further, in the cleaning treatment, the separation device 10 can increase the discharge amount of the liquid to be treated, which is discharged to outside the filtration tank 11, per unit time, for example.

Further, a plurality of vent pipes 17 may be disposed in the filtration tank 11, for example. Then in step S13, the administrator may sequentially perform the opening control of the valves V4 disposed in the plurality of vent pipes 17 respectively, for example. Thereby in the filtration tank 11, a rapid rise of pressure in the space SP2 can be prevented, and the generation of turbulence of the liquid to be treated 1 during discharge can be prevented, for example. Therefore in the filtration tank 11, suspended solids can be efficiently transferred from the carriers 12 to the liquid to be treated 1, for example.

### [Filtering treatment in modification]

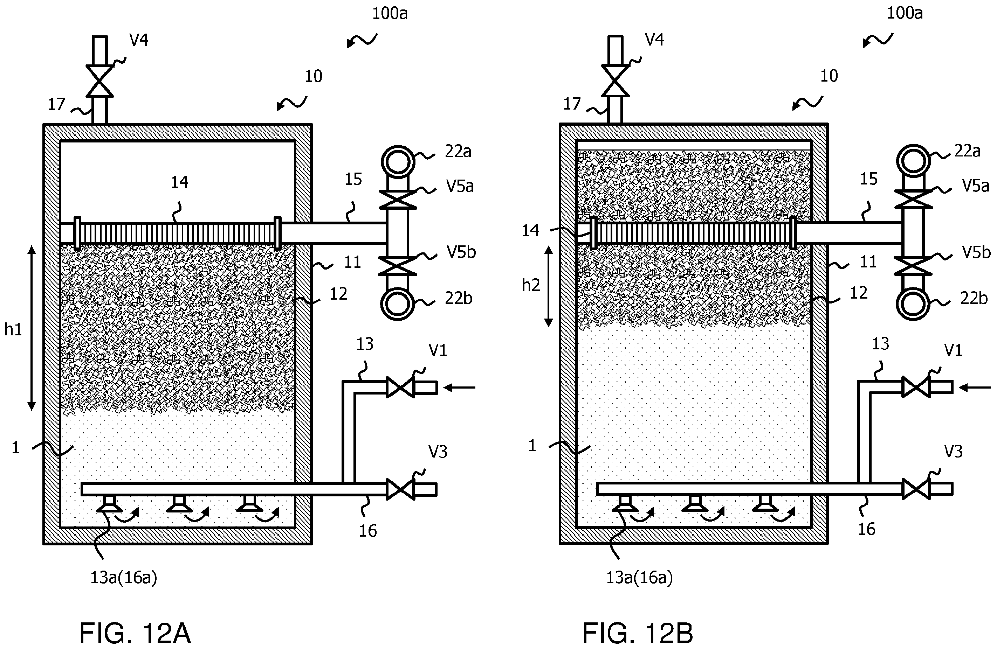

A specific example of the filtering treatment according to a modification will be described next. Fig. 12 is a diagram depicting the specific example of the filtering treatment according to the modification. In this modification, treatment to adjust the thickness of the carriers 12 through which the liquid to be treated 1 passes will be described.

Concentration of the suspended solids contained in the liquid to be treated 1 (the target of solid-liquid separation) may change considerably. For example, in the case where the separation device 10 is installed in a sewage treatment plant, the amount of the liquid to be treated 1 (that is, sewage) that flows into the sewage treatment plant increases if heavy rain falls in the upstream region of the sewage treatment plant, which decreases the concentration of the suspended solids contained in the liquid to be treated 1. In the case where the amount of the liquid to be treated 1 increases and the concentration of the suspended solids decreases like this, it is preferable to increase the amount of the liquid to be treated 1, for which solid-liquid separation is performed per unit time, by decreasing the thickness of the carriers 12 through which the liquid to be treated 1 passes. The treatment to adjust the thickness of the carriers 12 will now be described.

First, the filtering treatment where the opening control of the valve V4 is performed before starting supply of the liquid to be treated 1 to the filtration tank 11, and then the closing control of the valve V4 is performed when a predetermined condition is satisfied, will be described.

In a water treatment system 100a illustrated in Fig. 12, a discharge pipe 22a (hereafter also called "branch pipe 22a) and a discharge pipe 22b (hereafter also called a branch pipe 22b), which are disposed at different heights, instead of the discharge pipe 21 described in Fig. 5, communicate with the liquid discharge pipe 15. Specifically, in the example illustrated in Fig. 12, the discharge pipe 22a is a pipe disposed at a position higher than the height of the screen 14, and the discharge pipe 22b is a pipe disposed at a position lower than the height of the screen 14. Further, in the water treatment system 100a illustrated in Fig. 12, a valve V5a is disposed in the discharge pipe 22a, and a valve V5b is disposed in the discharge pipe 22b, instead of the valve V2 described in Fig. 5.

Hereafter the discharge pipe 22a and the discharge pipe 22b may collectively be called "discharge pipe 22", and the valve V5a and the valve V5b may collectively be called "valve V5". The inflow portion described below includes the discharge pipe 22a and the discharge pipe 22b respectively. Further, the case where the discharge pipe 22a and the discharge pipe 22b communicate with the liquid discharge pipe 15 will be described below, but the liquid discharge pipe 15 may communicate with at least three discharge pipes 22, which are disposed at different heights, for example.

Specifically, in the case of performing the filtering treatment according to the present modification, the administrator performs opening control of the valve V4 before starting supply of the liquid to be treated 1 into the filtration tank 11, for example. Then the administrator performs the closing control of the valve V4 when the water level of the liquid to be treated 1 inside the filtration tank 11 reached an arbitrary height, for example.

Thereby the administrator can adjust the height of the water level of the liquid to be treated 1 (height of the filling position of the carriers 12) to an arbitrary height, and can adjust the thickness of the carriers 12 located below the screen 14 (that is, the thickness of the carriers 12 through which the liquid to be treated 1 supplied into the filtration tank 11 passes).

Specifically, as illustrated in Fig. 12A, the administrator can adjust the thickness of the carriers 12 located below the screen 14 to h1, by adjusting the height of the upper end of the filling position of the carriers 12 to the height of the screen 14, for example.

Further, as illustrated in Fig. 12B, the administrator can adjust the thickness of the carriers 12 located below the screen 14 to h2, which is less than h1, by adjusting the height of the upper end of the filling position of the carriers 12 to the height above the screen 14, for example.

In the case of adjusting the height of the upper end of the filling position of the carriers 12 to the height of the screen 14, as illustrated in Fig. 12A, the administrator needs to perform the opening control of the valve V5b and also performs the closing control of the valves other than the valve V5b of the valve V5 (closing control of the valve V5a in the case of Fig. 12A), for example, so that the liquid to be treated 1 is controlled to be discharged from the screen 14 to the discharge pipe 22b. In this case, the valves other than the valve V5b (e.g. valve V5a) are completely closed. In other words, in this case, the administrator control such that the maximum height when the liquid to be treated 1 is discharged (height of the liquid discharge pipe 15) becomes the height corresponding to the water level of the liquid to be treated 1 inside the filtration tank 11 (preferably the height the same as the water level of the liquid to be treated 1), for example. Thereby the water level of the liquid to be treated 1 inside the filtration tank 11 is maintained at the height adjusted by the opening/closing control of the valve V4, and the thickness of the carriers 12, through which the liquid to be treated 1 passes, is maintained. Specifically, in this case, the administrator maintains the thickness of the carriers 12, through which the liquid to be treated 1 passes, to h1 by controlling such that the liquid to be treated 1 flows through the discharge pipe 22b which is disposed at a height corresponding to the screen 14, for example.

Further, in the case of adjusting the height of the upper end of the filling position of the carriers 12 to the height above the screen 14, as illustrated in Fig. 12B, the administrator needs to perform the opening control of the valve V5a, and also to perform the closing control of the valves other than the valve V5a of the valve V5 (closing control of the valve V5b in the case of Fig. 12A), so that the liquid to be treated 1 is controlled to be discharged from the screen 14 to the discharge pipe 22a. In this case, the valves other than the valve V5a (e.g. valve V5b) is completely closed. In other words, in this case, the administrator controls such that the maximum height when the liquid to be treated 1 is discharged (height of the discharge pipe 22a) becomes the height corresponding to the water level of the liquid to be treated 1 inside the filtration tank 11 (preferably the height the same as the water level of the liquid to be treated 1), for example. Thereby the water level of the liquid to be treated 1 inside the filtration tank 11 is maintained at the height adjusted by the opening/closing control of the valve V4, and the thickness of the carriers 12, through which the liquid to be treated 1 passes, is maintained. Specifically, in this case, the administrator maintains the thickness of the carriers 12 through which the liquid to be treated 1 passes, to h2 by controlling such that the liquid to be treated 1 flows through the discharge pipe 22a, which is disposed at a height corresponding to above the screen 14, for example.

As described above, the separation device 10 according to the present modification includes, for example: an outflow portion that allows the liquid to be treated 1 inside the screen 14 to flow to outside the filtration tank 11, and the outflow portion includes the liquid discharge pipe 15 which communicates with the screen 14, and the plurality of discharge pipes 22 branched from the liquid discharge pipe 15. The plurality of discharge pipes 22 are disposed at different heights respectively.

Thereby the separation device 10 according to the present modification can adjust the height of the filling position of the carriers 12 to an arbitrary height, and the thickness of the carriers 12, through which the liquid to be treated 1 supplied into the filtration tank 11 passes, can be adjusted to an arbitrary thickness, for example.

**REFERENCE SIGNS LIST**

| | | | |
|---|---|---|---|
| 1: | liquid to be treated | 10: | SEPARATION DEVICE |
| 11: | filtration tank | 12: | carriers |
| 13: | liquid supply pipe | 13a: | liquid supply pipe |
| 14: | tubular screen | 15: | discharge pipe |
| 16: | discharge pipe | 16a: | discharge port |
| 17: | vent pipe | 18: | screen |
| 18a: | open holes | 18b1: | spacer |
| 18b2: | through hole | 18b3: | fastening bolt |
| 22: | discharge pipe | 22a: | discharge pipe |
| 22b: | discharge pipe | 100: | water treatment system |
| 100a: | Water treatment system | SP1: | space |
| SP2: | space | V1: | valve |
| V2: | valve | V3: | valve |
| V4: | valve | V5: | valve |
| V5a: | valve | V5b: | valve |

## Claims

1. A separation device, comprising:
a tank which is filled with carriers that separate substances contained in liquid and to which the liquid is supplied;
a discharge portion which discharges the substances that are separated by the carriers to outside the tank; and
a tubular first screen which is disposed inside the tank and which separates the carriers from the liquid, wherein
at least a part of the discharge portion is disposed inside the tank and below the first screen in a vertical direction.

2. The separation device according to claim 1, further comprising a vent portion which performs ventilation between inside the tank and outside the tank.

3. The separation device according to claim 1, further comprising an outflow portion which allows the liquid inside the first screen to flow to outside the tank, wherein
the outflow portion includes a first pipe which communicates with the first screen, and a plurality of branch pipes which branch from the first pipe, and
the plurality of branch pipes are disposed at different heights respectively.

4. The separation device according to claim 1, wherein
the discharge portion includes a second pipe a part of which is disposed inside the tank and an other part of which is disposed outside the tank, and at least one second screen which blocks passing of the carriers inside the tank.

5. A control method for a separation device, including: a tank which is filled with carriers that separate substances contained in liquid and to which the liquid is supplied; a discharge portion which discharges the substances that are separated by the carriers to outside the tank; a tubular first screen which is disposed inside the tank and which separates the carriers from the liquid; and an outflow portion which allows the liquid inside the first screen to flow to outside the tank, wherein at least a part of the discharge portion is disposed inside the tank and below the first screen in a vertical direction, the outflow portion includes a first pipe through which the liquid inside the first screen flows and a first valve disposed in the first pipe, and the discharge portion includes a second pipe through which the substances flow and a second valve disposed in the second pipe,
the method comprising:
a supply step of supplying the liquid to the tank, performing closing control on the second valve, and performing opening control on the first valve;
a separation step of separating the substances contained in the liquid by using the carriers; and
an outflow step of allowing the liquid from which the substances are separated, to flow to inside the first screen, and allowing the liquid, which has flowed in, to flow to outside the tank through the second pipe.

6. The control method according to claim 5, further comprising a discharge step of stopping supply of the liquid to the tank, performing opening control on the second valve, and discharging the liquid and the substances separated by the carriers to outside the tank through the second pipe.
